# EUROPEAN PATENT APPLICATION

(11) **EP 4 835 515 A1**
(43) Date of publication of application: **04.11.2026**
(21) Application number: 24911882.9
(22) Date of filing: 25.09.2024
(51) Int. Cl.: G01S 7/495

(54) **OBJECT DETECTION DEVICE AND OBJECT DETECTION METHOD**

(30) Priority: 27.12.2023 JP 2023221086
(71) Applicant: Panasonic Intellectual Property Management Co., Ltd., Kadoma-shi, Osaka 571-0057 (JP)
(72) Inventor: KASHIWABARA Yoshiro, Kadoma-shi, Osaka 571-0057 (JP); SUENAGA Kiyoyuki, Kadoma-shi, Osaka 571-0057 (JP); SHIIHARA Masahiro, Kadoma-shi, Osaka 571-0057 (JP)
(74) Representative: SSM Sandmair
(86) International application number: PCT/JP2024/034123
(87) International publication number: WO 2025/141988

(57) **Abstract**

This object detection device comprises: a light-emitting element that projects projection light; a light-receiving element; and a controller. The controller is capable of setting: a first light projection mode for generating a plurality of light projection reference timings and projecting each light projection reference timing as a light projection timing; and a second light projection mode for projecting light according to each light projection timing obtained by temporally shifting each light projection reference timing. **In** the second light projection mode, each light projection reference timing is determined by shifting each light projection timing such that a shift time at which each light projection reference timing shifts is changed by a fixed time.

## Description

### TECHNICAL FIELD

The present disclosure relates to an object detection device and an object detection method for optically detecting an object.

### BACKGROUND ART

In the related art, a pulse echo type distance measurement device that prevents erroneous measurement due to interference light by adjusting a slot number indicating a light emission timing is known (see Patent Literature 1). In the distance measurement device, a light emission signal indicating a light emission timing is generated by a slot generation circuit based on a slot number set by a CPU, and a pulsed laser beam is emitted by a light emission circuit in response to the light emission signal. The emitted pulsed laser beam is projected by a scanner that performs scanning based on a scanner control signal given from a timing generation circuit. A time from the light emission timing to a light reception timing at which reflection light of the projected pulsed laser beam by a preceding vehicle is received is counted by a counter, and an inter-vehicle distance to the preceding vehicle is calculated by the CPU based on the counted value. Presence or absence of interference light is detected by a light reception monitoring circuit based on a light reception signal of a light reception circuit. When the interference light is detected, the slot number is changed by the CPU.

### CITATION LIST

### PATENT LITERATURE

Patent Literature 1: JPH07-35863A

### SUMMARY OF INVENTION

### TECHNICAL PROBLEM

In a state in which the distance measurement device of Patent Literature 1 is disposed to face another distance measurement device having the same light emission timing or the like, when the two distance measurement devices emit light at the same timing, projection light from one distance measurement device is received by the other distance measurement device, so that the projection light may be detected. In this case, the distance measurement device of Patent Literature 1 changes the slot number and projects the projection light at different timings. However, when the two distance measurement devices change the slot number in the same manner according to the same specification, one distance measurement device may receive the next projection light from the other distance measurement device. In this case, one distance measurement device may erroneously detect presence of an object due to interference of projection light from the other distance measurement device.

The present disclosure provides an object detection device and an object detection method capable of preventing erroneous detection of presence of an object due to interference of projection light from another object detection device even when the other object detection device is disposed to face the object detection device.

### SOLUTION TO PROBLEM

According to an aspect of the present disclosure, an object detection device including: a light emitting element configured to project projection light in accordance with a light projection timing; a light receiving element configured to receive reflection light of the projection light reflected by an object and to generate a light reception signal; and a controller, in which the controller generates a plurality of light projection reference timings to project light a plurality of times at a constant period, is capable of setting a first light projection mode in which light is projected with each of the light projection reference timings as the light projection timing and a second light projection mode in which light is projected according to the light projection timing obtained by temporally shifting each of the light projection reference timings, and in the second light projection mode, shifts each of the light projection reference timings such that a shift time for shifting each of the light projection reference timings changes by a constant time, and determines the light projection timing.

According to an aspect of the present disclosure, an object detection method including: projecting projection light in accordance with a light projection timing; receiving reflection light of the projection light reflected by an object and generating a light reception signal; generating a plurality of light projection reference timings to project light a plurality of times at a constant period, and setting a light projection mode, in which as the light projection mode, a first light projection mode in which light is projected with each of the light projection reference timings as the light projection timing and a second light projection mode in which light is projected in accordance with the light projection timing obtained by temporally shifting each of the light projection reference timings are set, and the setting of the light projection mode includes when the second light projection mode is set as the light projection mode, shifting each of the light projection reference timings such that a shift time for shifting each of the light projection reference timings changes by a constant time, and determining the light projection timing.

### ADVANTAGEOUS EFFECTS OF INVENTION

According to the present disclosure, it is possible to prevent erroneous detection of presence of an object due to interference of projection light from another object detection device even when the other object detection device is disposed to face the object detection device.

### BRIEF DESCRIPTION OF DRAWINGS

FIG. 1 is an external perspective view of an object detection device according to a first embodiment of the present disclosure.
FIG. 2A is a longitudinal cross-sectional view of the object detection device according to the first embodiment.
FIG. 2B is a top view of the object detection device illustrated in FIG. 1.
FIG. 3 is a block diagram illustrating a functional configuration example of the object detection device according to the first embodiment.
FIG. 4 is a diagram illustrating details of object detection.
FIG. 5 is a diagram illustrating an example of a position of an object present in a detection area.
FIG. 6 is a diagram illustrating an example of a light projection timing of projection light and a light reception timing of detection light when an object is present in the detection area.
FIG. 7 is a diagram illustrating an example of a position of an object present outside the detection area.
FIG. 8 is a diagram illustrating an example of the light projection timing of the projection light and the light reception timing of the detection light when an object is present outside the detection area.
FIG. 9 is a diagram illustrating a first example of the light projection timing and the light reception timing in a normal light projection mode.
FIG. 10 is a diagram illustrating a second example of the light projection timing and the light reception timing in the normal light projection mode.
FIG. 11 is a diagram illustrating a third example of the light projection timing and the light reception timing in the normal light projection mode.
FIG. 12 is a diagram illustrating an example of the light projection timing and the light reception timing when a shift light projection mode SM1 is designated.
FIG. 13 is a diagram illustrating an example of the light projection timing and the light reception timing when a shift light projection mode SM2 is designated.
FIG. 14 is a diagram illustrating an example of the light projection timing and the light reception timing when a shift light projection mode SM3 is designated.
FIG. 15 is a diagram illustrating an example of the light projection timing and the light reception timing when a shift light projection mode SM4 is designated.
FIG. 16 is a diagram illustrating an example of the light projection timing and the light reception timing when a shift light projection mode SM5 is designated.
FIG. 17 is a diagram illustrating an example of the light projection timing when another shift light projection mode SM6 is designated.
FIG. 18 is a diagram illustrating an arrangement relation of a plurality of distance measurement devices in a comparative example.
FIG. 19 is a diagram illustrating light projection timings and light reception timings at the time of object erroneous detection in the comparative example.
FIG. 20 is a diagram illustrating object erroneous detection in the comparative example.

### DESCRIPTION OF EMBODIMENTS

Hereinafter, embodiments will be described in detail with reference to the drawings as appropriate. However, unnecessarily detailed description may be omitted. For example, detailed description of well-known matters and description of substantially the same configuration may be omitted. This is to avoid unnecessary redundancy of the following description and to facilitate understanding of those skilled in the art. It should be noted that the accompanying drawings and the following description are provided for those skilled in the art to fully understand the present disclosure, and are not intended to limit the subject matter described in the claims.

For example, in the embodiments, the term "unit" or "device" is not limited to a physical configuration that is mechanically implemented by hardware, and also includes those that implement functions of the configuration thereof by software such as a program. Functions of one configuration may be implemented by two or more physical configurations, or functions of two or more configurations may be implemented by, for example, one physical configuration.

### (Circumstances Leading to Obtaining Embodiment According to Present Disclosure)

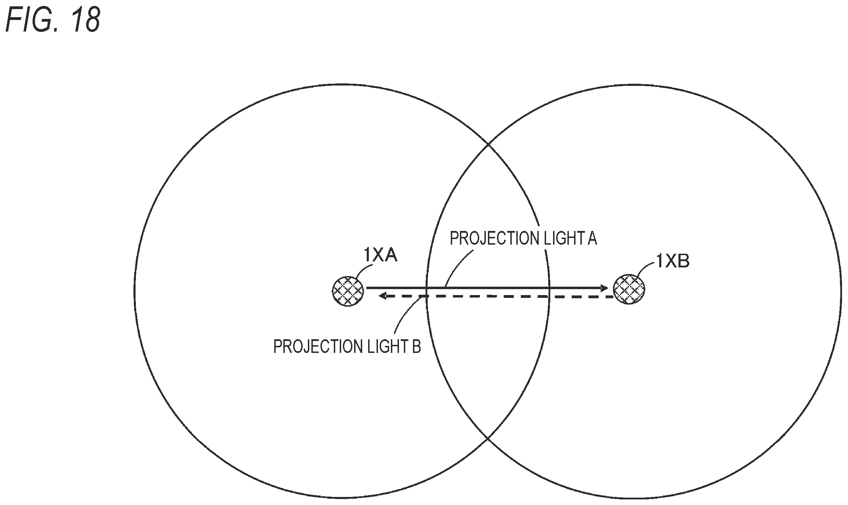

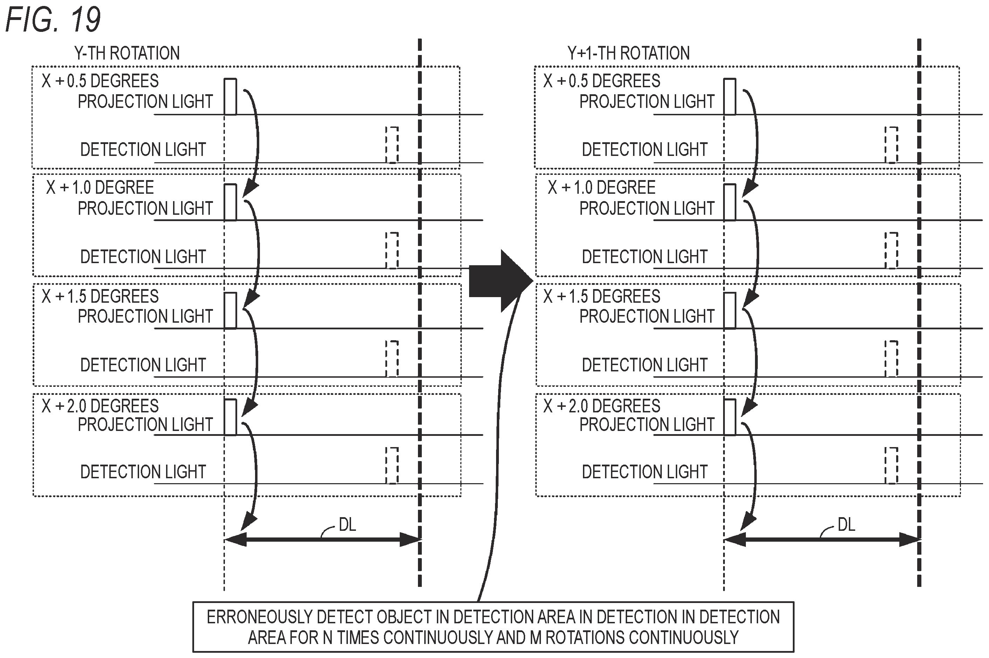

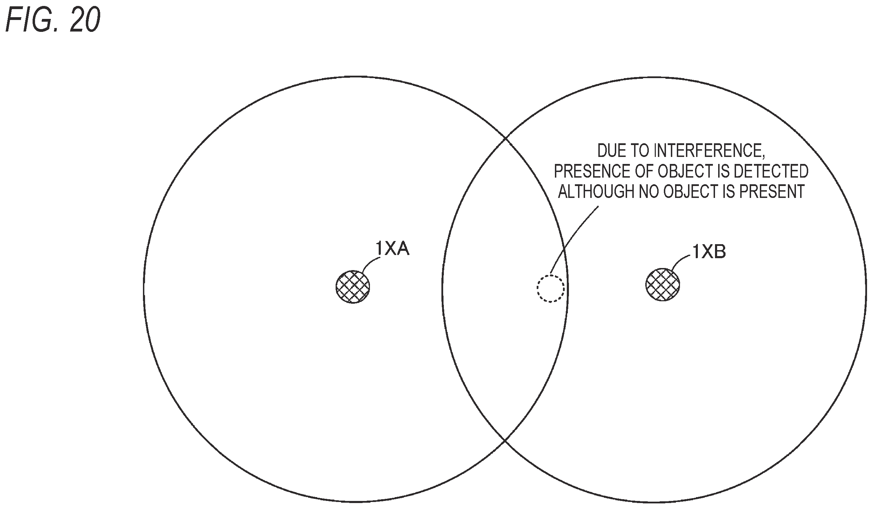

It is assumed that a plurality of distance measurement devices (object detection devices) according to a comparative example are installed to face each other as illustrated in FIG. 18. The distance measurement device according to the comparative example is, for example, the distance measurement device according to Patent Literature 1. It is assumed that a distance measurement device 1XA and a distance measurement device 1XB operate asynchronously. In this case, at a timing when the distance measurement device 1XA emits projection light A for distance measurement, projection light B emitted by the distance measurement device 1XB for distance measurement may be received by a light receiving element of the distance measurement device 1XA. In this case, when the projection light B is detected by a two-dimensional scan distance measurement device, for example, N times continuously for M rotations continuously (N and M are integers of 2 or more) within a longest detectable time corresponding to a maximum detectable distance (that is, in detection area) as illustrated in FIG. 19, the distance measurement device 1XA erroneously detects that an object is present in the detection area. That is, erroneous detection occurs due to interference that an object is recognized as being present even though there is no object in the space (specifically, in detection area) as illustrated in FIG. 20.

In the following embodiments, an object detection device and an object detection method capable of preventing erroneous detection of presence of an object due to interference of projection light from another object detection device even when the other object detection device is disposed to face the object detection device will be described.

### (Embodiments)

### <Physical Configuration of Object Detection Device>

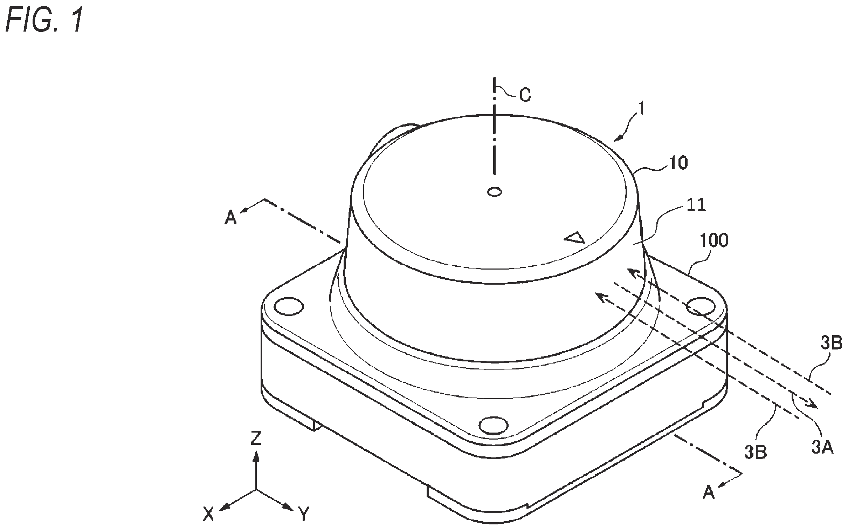

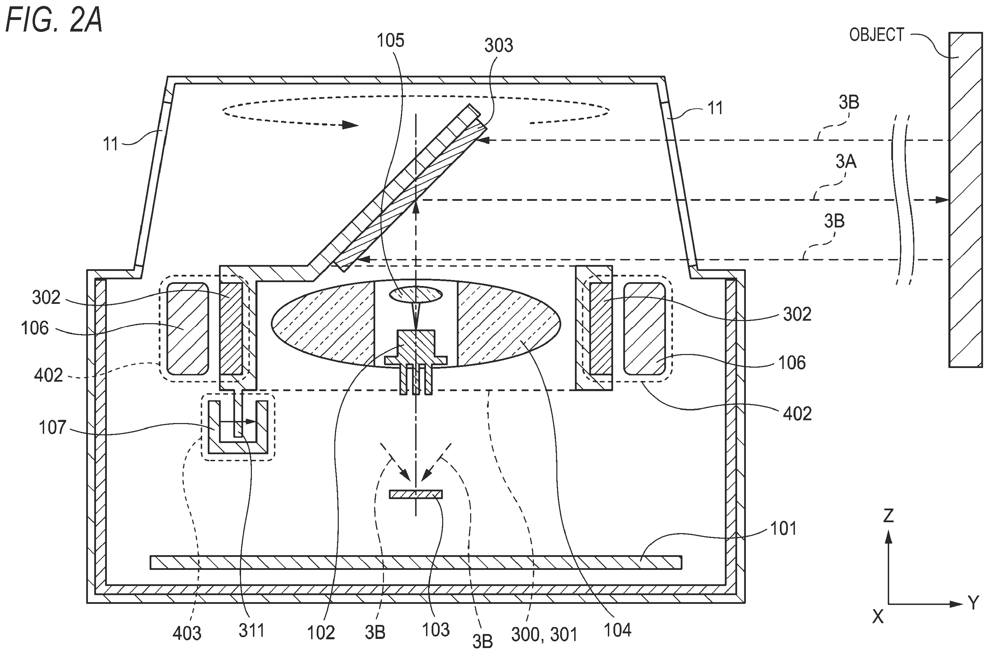

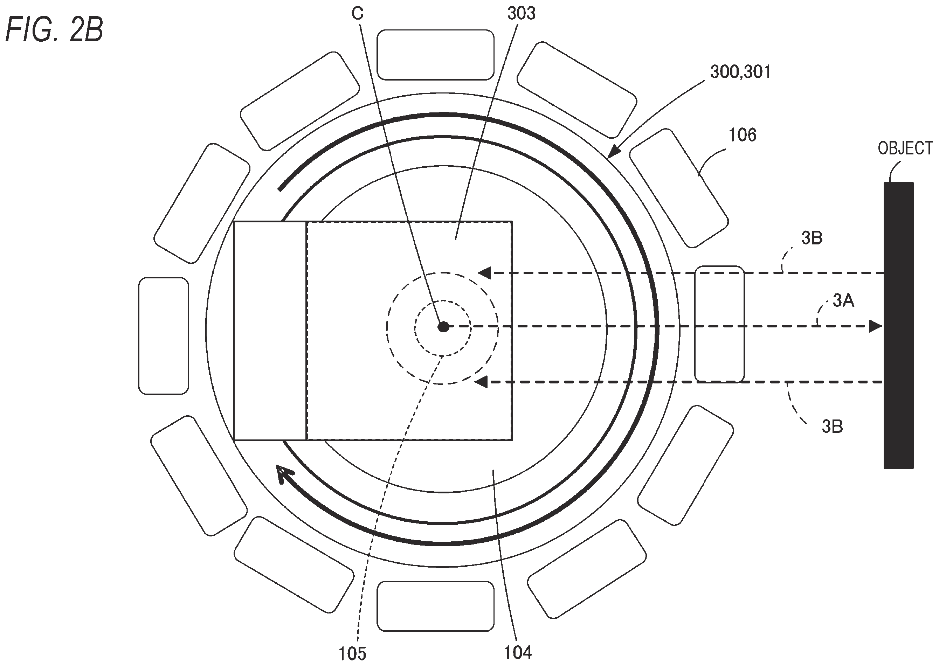

FIG. 1 is an external perspective view of an object detection device 1 according to a first embodiment. FIG. 2A is a longitudinal cross-sectional view of the object detection device according to the first embodiment. FIG. 2A corresponds to an A-A cross-sectional view of the object detection device 1 illustrated in FIG. 1. FIG. 2B is a top view of the object detection device 1 illustrated in FIG. 1. In FIG. 2B, some members such as a housing are omitted.

The object detection device 1 is, for example, a light detection and ranging (LiDAR) device. The object detection device 1 optically detects an object to be detected or measures a distance to the object to be detected using light such as a laser beam. The object detection device 1 performs two-dimensional scanning using light in a scanner system, and performs object detection and distance measurement.

As illustrated in FIGS. 1 and 2A, the object detection device 1 includes a fixed part 100, a rotation part 300, and an outer cover 10.

The fixed part 100 has a substantially rectangular parallelepiped shape. The rotation part 300 is connected to an upper surface of the fixed part 100 and has a cylindrical shape that rotates about an axis perpendicular to the upper surface as a rotation axis C. The outer cover 10 has a substantially cylindrical shape and covers the rotation part 300 from above. At least a part of a side surface of the outer cover 10 has a wavelength window 11 implemented using a wavelength selection member. The wavelength selection member is a material that transmits light of a predetermined wavelength (frequency) component used for object detection or distance measurement and that blocks light of a wavelength (frequency) component in a visible region. The wavelength selection member has a function of blocking ambient light such as natural light or electric light.

For convenience of description, as illustrated in FIG. 1, an axis perpendicular to the upper surface (or bottom surface) of the fixed part 100 is defined as a Z axis. An axis perpendicular to the Z axis is defined as an X axis. An axis perpendicular to the Z axis and the X axis is defined as a Y axis. For convenience of description, a positive direction of the Z axis may be referred to as "upper", a negative direction of the Z axis may be referred to as "lower", and a direction away from the Z axis in an X axis direction or a Y axis direction may be referred to as "lateral". Expressions related to these directions are used for convenience of description, and are not intended to limit a posture of the structure in actual use. For example, the object detection device 1 illustrated in FIG. 1 may be used upside down. The A-A cross-sectional view illustrated in FIG. 2A corresponds to a cross-sectional view of a YZ plane.

The bottom surface of the fixed part 100 may be fixedly provided on a predetermined plane (for example, floor surface or housing surface of predetermined device).

The rotation part 300 rotates about a center axis in a height direction (Z axis) of the cylinder as the rotation axis C. With the rotation of the rotation part 300, an optical axis of projection light (hereinafter referred to as projection light 3A) projected from a part of the side surface of the rotation part 300 in a lateral direction rotates about the rotation axis C. Along with this, the projection light 3A and an area in which object detection or distance measurement may be performed with the projection light 3A (hereinafter, referred to as detection area) also rotate. As will be described later, the object detection device 1 detects whether an object is present in the detection area based on a time of flight (ToF) between a timing at which the projection light 3A is projected and a timing at which the projection light 3A is received as light reflected by the object in the detection area (hereinafter referred to as reflection light 3B), and measures a distance to the object present in the detection area. The rotation part 300 makes one round around the rotation axis C, so that the object detection device 1 can measure the distance to the object present in the detection area of 360 degrees around the lateral direction.

The fixed part 100 includes a board 101, a light emitting element 102, a light receiving element 103, a focus lens 104, a collimator lens 105, a coil 106, and a photointerrupter 107. The rotation part 300 includes a rotation member 301, a magnet 302, and a reflecting mirror 303.

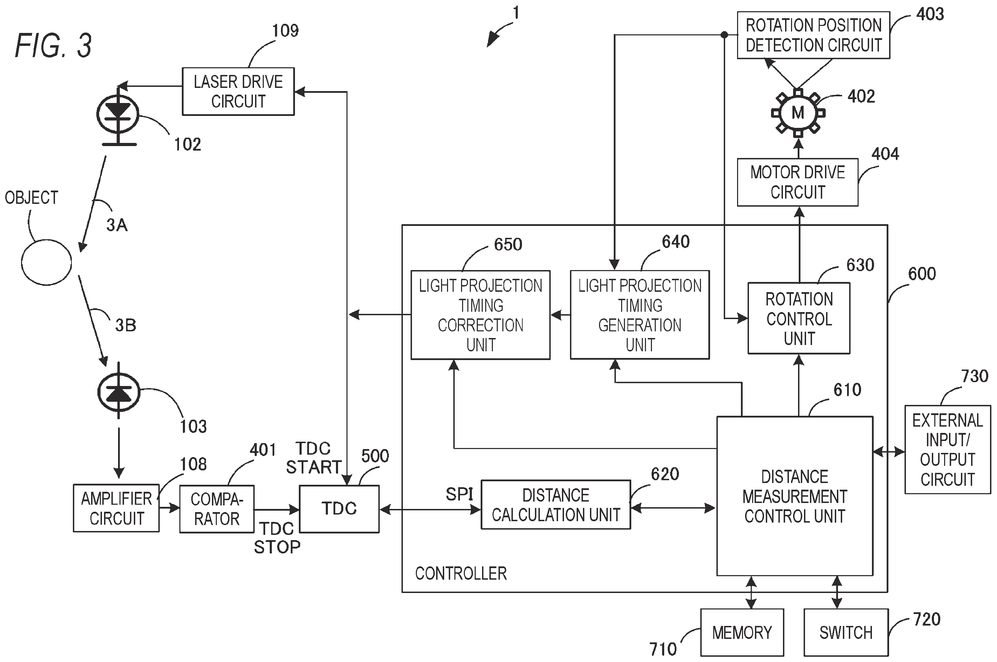

A motor 402 that is hollow (see FIG. 3) is formed by the coil 106 of the fixed part 100 and the magnet 302 of the rotation part 300, and the rotation part 300 rotates about the rotation axis C by being driven by the motor 402. As illustrated in FIG. 2B, a plurality of coils 106 are annularly arranged along the XY plane on a radially outer side of the rotation part 300 with the rotation axis C as the center.

As illustrated in FIG. 2A, the board 101 is, for example, a printed circuit board (PCB). A comparator 401, a TDC 500, and a controller 600 (see FIG. 3), which will be described later, are mounted on the board 101. TDC is an abbreviation for Time to Digital Converter.

The light emitting element 102 is disposed along the rotation axis C and projects the projection light 3A upward.

The collimator lens 105 corrects the projection light 3A received from the light emitting element 102 to substantially parallel light and outputs the substantially parallel light upward.

The reflecting mirror 303 is provided in the rotation member 301 to reflect, in the lateral direction (direction along XY plane), the parallel light projected upward from the light emitting element 102 and corrected by the collimator lens 105. Since the reflecting mirror 303 rotates together with the rotation member 301, the projection light is projected (scanned) at 360 degrees around the rotation axis C in a direction orthogonal to the rotation axis C (lateral direction) with the elapse of time. The projection light 3A reflected by the reflecting mirror 303 passes through the wavelength window 11 of the outer cover 10 and is projected to the detection area.

The reflection light 3B obtained by the projection light 3A being reflected by the object passes through the wavelength window 11 of the outer cover 10 and is reflected downward by the reflecting mirror 303.

The focus lens 104 focuses the reflection light 3B reflected downward by the reflecting mirror 303 and outputs the reflection light 3B downward.

The light receiving element 103 receives the reflection light 3B focused by the focus lens 104.

The rotation member 301 includes a plurality of ribs 311 (slits) at constant intervals. For example, the rotation member is annular, and the ribs are present at constant intervals in a circumferential direction. The photointerrupter 107 (photocoupler) is disposed to be able to detect passage of one rib 311. By detecting and counting the passage of one rib 311 using the photointerrupter 107, the controller 600 described later can detect a rotation angle (rotation position) of the rotation member 301 (that is, rotation part 300). Therefore, the photointerrupter 107 and the ribs 311 can constitute a rotation angle detector 403 (see FIG. 3) described later.

### <Functional Configuration of Object Detection Device>

FIG. 3 is a block diagram illustrating a functional configuration example of the object detection device 1 according to the first embodiment.

The object detection device 1 includes the light emitting element 102, the light receiving element 103, an amplifier circuit 108, a laser drive circuit 109, the comparator 401, and the TDC 500. The object detection device 1 further includes the motor 402, the rotation angle detector 403, and a motor drive circuit 404. The object detection device 1 further includes the controller 600, a memory 710, a switch 720, and an external input/output circuit 730. The controller 600 has functions as a distance measurement control unit 610, a distance calculation unit 620, a rotation control unit 630, a light projection timing generation unit 640, and a light projection timing correction unit 650. Each unit in the controller 600 may be implemented as a dedicated circuit by hardware or may be functionally implemented by software.

The light emitting element 102 includes, for example, a laser diode. The light emitting element 102 receives a drive signal for driving the light emitting element 102 from the laser drive circuit 109, and projects (emits) the projection light 3A (illumination light) in accordance with the drive signal. The light emitting element 102 periodically projects light and projects the projection light 3A in accordance with the light projection timing.

The light receiving element 103 includes, for example, a photodiode. The light receiving element 103 receives the reflection light 3B and outputs a light reception signal (electric signal) corresponding to a light reception level. The reflection light 3B may be detection light obtained by detecting an object or may include scattered light scattered by an object.

The amplifier circuit 108 receives and amplifies the light reception signal from the light receiving element 103 to increase the signal level of the light reception signal.

The laser drive circuit 109 receives a pulse signal for instructing light projection by the light emitting element 102 from the light projection timing correction unit 650 of the controller 600. The laser drive circuit 109 outputs a pulsed drive signal corresponding to the received pulse signal (also referred to as input pulse signal) to the light emitting element 102. Accordingly, the light emitting element 102 projects the pulsed projection light 3A. In FIG. 3, the input of the input pulse signal is expressed as TDC START (START signal).

The comparator 401 receives the amplified light reception signal from the light receiving element 103. The comparator 401 performs binarization according to the signal level of the light reception signal and outputs a pulse signal (also referred to as light reception pulse signal). The light reception pulse signal is at a predetermined High level during a period in which the level of the light reception signal is equal to or higher than a predetermined comparator threshold (comparator slice level), and is at a predetermined GND level during a period in which the level of the light reception signal is lower than the comparator threshold. The High level is larger than the GND level. In FIG. 3, the output of the light reception pulse signal is expressed as TDC STOP (STOP signal).

The TDC 500 receives the START signal from the light projection timing correction unit 650. An input timing of the START signal corresponds to a light projection timing of the projection light 3A by the light emitting element 102. The TDC 500 receives the STOP signal from the comparator 401. An input timing of the STOP signal corresponds to a light reception timing of the reflection light 3B by the light receiving element 103, and specifically corresponds to a timing at which the light reception pulse signal is generated. The TDC 500 outputs information on time of flight of light (TOF) based on the START signal and the STOP signal. Therefore, it can be said that the TDC 500 measures a time from a timing at which the laser drive circuit 109 is driven to a timing of signal change from the comparator 401. In addition, the TDC 500 may output information on a pulse width of the light reception signal.

The motor 402 applies a drive force for rotating the rotation part 300 to the rotation part 300 based on a motor drive signal from the motor drive circuit 404. The motor 402 can rotate the rotation part 300 by the drive force to change a light projection direction of the projection light 3A to any direction and to change a light receiving direction of the reflection light 3B to any direction. The rotation angle detector 403 detects the rotation angle of the rotation part 300. The rotation angle indicates an angle with respect to a predetermined reference angle. The rotation angle detector 403 may detect a rotation speed of the motor 402. The motor drive circuit 404 generates a drive signal for driving the motor 402 based on a rotation control signal from the rotation control unit 630 of the controller 600, and sends the drive signal to the motor 402.

The controller 600 may include a micro processing unit (MPU), a central processing unit (CPU), a digital signal processor (DSP), and the like. The controller 600 may be implemented by various integrated circuits (for example, large scale integration (LSI) or field programmable gate array (FPGA)). The controller 600 implements various functions by executing a program stored in a memory disposed inside or outside the controller 600. The controller 600 includes, as various functional units, the distance measurement control unit 610, the distance calculation unit 620, the rotation control unit 630, the light projection timing generation unit 640, and the light projection timing correction unit 650.

The distance measurement control unit 610 controls distance measurement by the object detection device 1 and comprehensively controls each unit in the controller 600. In addition, the distance measurement control unit 610 receives information obtained from the memory 710 and the switch 720 as parameters for performing various processes and controls by the controller 600. In addition, the distance measurement control unit 610 outputs, to the external input/output circuit 730, information on results of various processes and controls performed by the controller 600.

The distance calculation unit 620 acquires information on TOF and pulse width from the TDC 500. For example, the distance calculation unit 620 calculates a distance from the object detection device 1 to an object by converting the temporal digital value (TOF) into a distance based on the acquired TOF and the speed of light. The distance is a distance value measured according to TOF, and is also referred to as a measured distance value.

In addition, the distance calculation unit 620 may acquire information on the rotation angle corresponding to the light projection timing corresponding to the START signal, which is the basis of the TOF corresponding to the measured distance value, from the rotation angle detector 403 or the like, or may derive the information by calculation. The distance calculation unit 620 may specify a two-dimensional position of the object based on the measured distance value and the obtained rotation angle.

The rotation control unit 630 controls the rotation of the motor 402, that is, the rotation of the rotation part 300. Specifically, the rotation control unit 630 sends a rotation control signal for controlling the rotation of the motor 402 to the motor drive circuit 404. The rotation control unit 630 generates a rotation control signal for setting the rotation of the motor 402 to rotation at a constant speed based on the rotation angle information from the rotation angle detector 403 and the rotation speed information. That is, the rotation control unit 630 causes the motor 402 and the rotation part 300 to rotate at a constant speed.

The light projection timing generation unit 640 acquires information on the rotation angle detected by the rotation angle detector 403 and the rotation speed. The light projection timing generation unit 640 generates a light projection reference timing (light emission reference timing) based on the acquired rotation angle or the rotation angle and the rotation speed. The light projection reference timing is a light projection timing (light emission timing) serving as a reference by the light emitting element 102.

For example, the light projection timing generation unit 640 may generate the light projection reference timing such that the light emitting element 102 projects light at a timing when the detected rotation angle is a predetermined angle (for example, 0.5 degrees, 1.0 degree, 1.5 degrees, or ... relative to reference angle). That is, the light projection timing generation unit 640 may acquire the rotation angle detected by the rotation angle detector 403 and determine a constant period in which the light projection reference timing is generated based on the rotation angle.

For example, the light projection timing generation unit 640 may generate the light projection reference timing such that the light emitting element 102 projects light at a constant period of a clock generated by a clock generator (not illustrated), that is, at predetermined time intervals (for example, time intervals of 0.5 degrees, 1.0 degree, 1.5 degrees, or ... relative to reference angle). That is, the light projection timing generation unit 640 may acquire the clock generated by the clock generator and determine the constant period in which the light projection reference timing is generated based on the clock.

According to the generation of the light projection reference timing based on the clock, the light emitting element 102 can project light at a constant period even when the rotation of the rotation part 300 is not at a constant speed. In addition, according to the generation of the light projection reference timing based on the rotation angle, the light emitting element 102 can project light in a constant period even when the clock generation is not at a constant period.

The light projection timing correction unit 650 corrects the light projection reference timing generated by the light projection timing generation unit 640 by temporally shifting the light projection reference timing, and determines the light projection timing. A temporal amount (also referred to as shift amount or shift time) by which the light projection reference timing is shifted by the correction varies depending on the light projection reference timing. For example, the shift time may vary depending on how many degrees (for example, 0.5 degrees, 1.0 degree, or ...) the rotation part 300 has relative to the reference angle. The correction on the plurality of light projection reference timings may include a plurality of light projection reference timings having different shift times in which the light projection timings are temporally shifted, or may include a plurality of light projection reference timings having the same shift time. When the shift times are different, for example, continuous temporally-pervious and subsequent light projection timings are determined such that the shift times are different by a constant time α. In addition, among the plurality of light projection reference timings to be generated, there may be a light projection reference timing that is determined as the light projection timing without being corrected.

The memory 710 may be, for example, a nonvolatile memory, and may include other memories and storage devices. The memory 710 stores various data, information, programs, and the like. The memory 710 may store, for example, area information related to a detection area DR. The detection area DR is formed in a circular shape or a fan shape around the object detection device 1, and is an area where objection detection and distance measurement by the object detection device 1 is possible. The area information may include information such as a position and a size of the detection area DR. The size of the detection area DR is determined by a length of a radius of the detection area DR. The radius is a maximum distance at which objection detection by the object detection device 1 is possible, and is also referred to as an area detection setting distance DL.

The memory 710 may include light projection mode information related to a light projection mode described later. The light projection mode information may include at least one piece of information among the light projection reference timing at which the light emitting element 102 projects light, the shift amount (shift time) for temporally shifting the light projection reference timing, the light projection timing obtained by correcting the light projection reference timing, and the like. The light projection mode information may be stored in the memory 710 for each light projection mode.

The switch 720 is, for example, a DIP switch or other switches, and receives various types of information. Instead of the switch 720, an input device (for example, button, key, or touch panel) capable of receiving various types of information may be provided in the object detection device 1. The switch 720 designates, for example, a detection area.

The external input/output circuit 730 performs wired or wireless communication with an external device (for example, programmable logic controller (PLC)). The external input/output circuit 730 performs an instruction from an external device or a notification to an external device.

### <Overview of Light Projection Mode>

Next, an overview of the light projection mode will be described.

The distance measurement control unit 610 of the controller 600 sets a light projection mode that determines a light projection method by the light emitting element 102. The light projection mode includes a normal light projection mode and a shift light projection mode.

The normal light projection mode is a light projection mode in which each generated light projection reference timing is directly set as the light projection timing without being shifted, and light is projected in accordance with the light projection timing. Therefore, in the normal light projection mode, the projection light 3A is projected at a constant period.

The shift light projection mode is a light projection mode in which each generated light projection reference timing is corrected and light is projected in accordance with each corrected light projection timing. In the shift light projection mode, the light projection reference timing is corrected such that the shift time shifted from the light projection reference timing changes by a constant time α, that is, changes by an integral multiple of α. The shift light projection mode may include a plurality of shift light projection modes based on a method of correcting the light projection reference timing, for example, based on a method of changing the shift amount at each of continuous light projection timings. The distance measurement control unit 610 may select and set one light projection mode from a plurality of light projection modes, or may switch and set a plurality of light projection modes.

For example, the distance measurement control unit 610 may acquire the area information from the memory 710 and set the detection area. For example, the distance measurement control unit 610 may set the light projection mode designated by the switch 720 among the light projection modes related to the light projection mode information stored in the memory 710. The distance measurement control unit 610 may switch and set a plurality of light projection modes in accordance with designation by the switch 720.

For example, the distance measurement control unit 610 may set a plurality of light projection modes, or may switch and set the light projection mode. In addition, it is assumed that a plurality of object detection devices 1 are arranged in respective detection areas, and the plurality of object detection devices 1 are asynchronous. Even in such a case, the distance measurement control unit 610 can prevent erroneous recognition that an object is present even though no object is present in a space in the detection area due to interference by the projection light 3A projected by another object detection device 1. For example, two object detection devices 1 are mounted on two automated guided vehicles (AGVs), and when the two AGVs pass each other, one object detection device 1 may receive the projection light 3A projected by the other object detection device 1. Even in this case, erroneous detection can be prevented. For example, when one object detection device 1 is set to the normal light projection mode and the other object detection device 1 is set to the shift light projection mode, there is a possibility that the projection light 3A is received once, but the possibility that the projection light 3A is continuously received a plurality of times can be reduced, and erroneous detection of an object can be prevented.

In addition, the normal light projection mode is a general light projection mode, but when there is a device that performs similar periodic light projection in other object detection devices, once interference occurs, interference is likely to occur continuously. In contrast, when the object detection device 1 is set to the shift light projection mode, interference with another object detection device is less likely to occur, and even when interference occurs once, the occurrence of interference can be continuously prevented.

### <Details of Object Detection>

Next, details of object detection will be described.

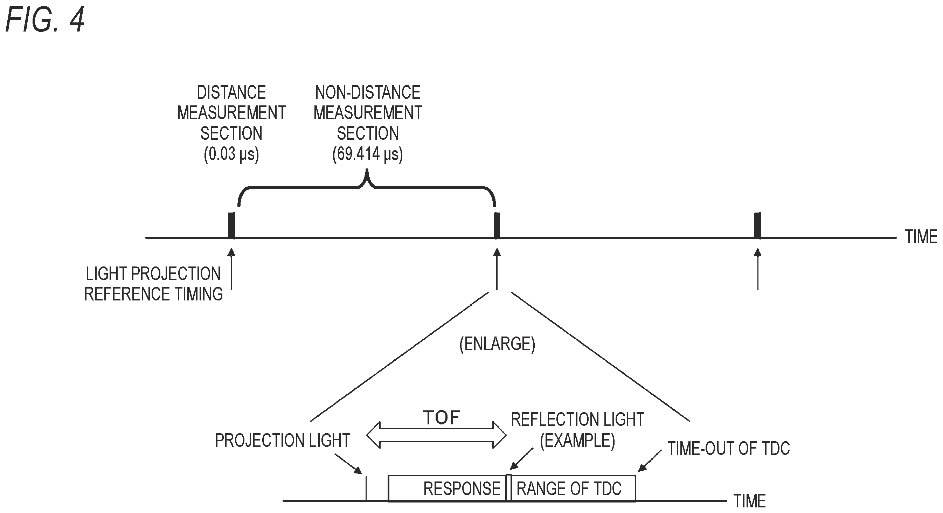

FIG. 4 is a diagram illustrating details of object detection.

In the object detection device 1, as an example, in the periodic light projection of the light emitting element 102, the light projection period is, for example, 69.444 µs (microseconds), and corresponds to 0.5 degrees. As an example, a rotation frequency of the motor 402 is, for example, 20 Hz. As an example, a distance conversion coefficient in TOF is 150 mm/ns.

For example, it is assumed that when the rotation part 300 rotates at a constant speed and the rotation angle of the rotation part 300 reaches a predetermined rotation angle, the light emitting element 102 projects light by the predetermined rotation angle. In this case, when the light projection reference timings are arranged on a time axis, the light projection reference timings are arranged at a constant time interval (for example, 69.444 µs). On the time axis, with respect to the light projection reference timing, a distance measurement section (detection section) is, for example, a time section of 0.030 µs (microseconds), and a non-distance measurement (non-detection section) is, for example, a time section of 69.414 µs. That is, when the light emitting element 102 projects the projection light 3A at the light projection reference timing, the TDC 500 times out unless the reflection light 3B is detected within a temporal response range of the TDC 500. A time until the TDC 500 times out is a maximum distance-measurable section (maximum detectable section).

For example, when the reflection light 3B is continuously received within the temporal response range of the TDC 500 based on light projection at continuous light projection timings (for example, light projection reference timings), the distance measurement control unit 610 determines that an object is present in the detection area. For example, when the reflection light 3B is not continuously received within the temporal response range of the TDC 500 based on light projection at continuous light projection timings (for example, light projection reference timings), the distance measurement control unit 610 determines that no object is present in the detection area. In addition, for example, when light other than the reflection light 3B (for example, projection light projected by another object detection device) is continuously received within the temporal response range of the TDC 500 based on light projection at continuous light projection timings (for example, light projection reference timings), the distance measurement control unit 610 also determines that an object is present in the detection area. This detection is erroneous detection.

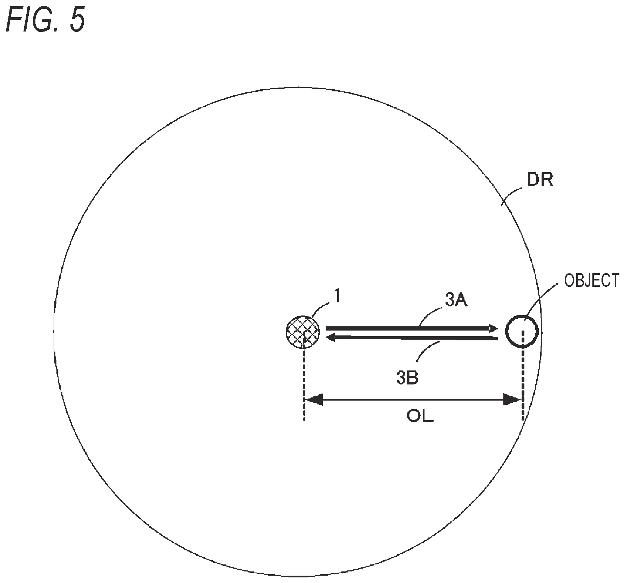

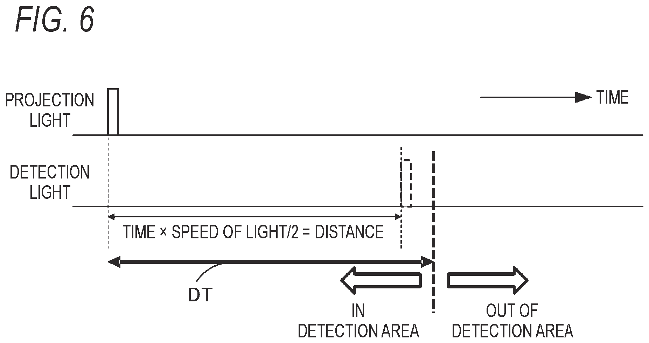

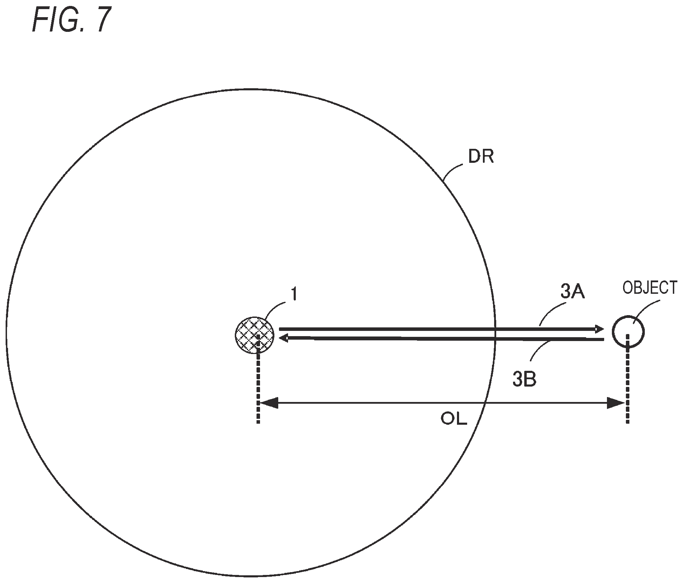

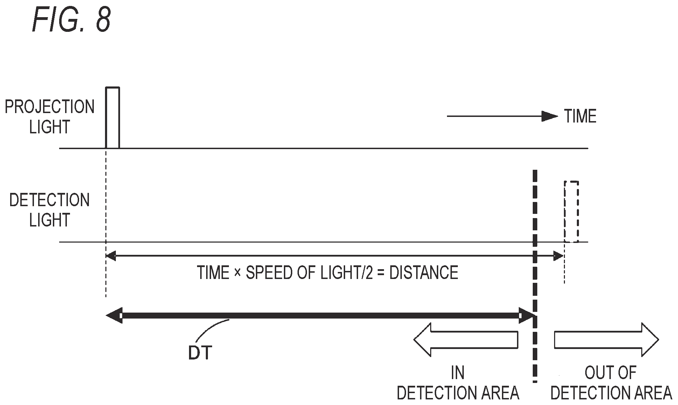

FIG. 5 is a diagram illustrating an example of a position of an object present in the detection area DR. FIG. 6 is a diagram illustrating an example of a light projection timing of the projection light 3A and a light reception timing of detection light (here, reflection light 3B) when an object is present in the detection area DR. FIG. 7 is a diagram illustrating an example of a position of an object present outside the detection area DR. FIG. 8 is a diagram illustrating an example of a light projection timing of the projection light 3A and a light reception timing of detection light (here, reflection light 3B) when an object is present outside the detection area DR.

As an example, in a case where the motor 402, that is, the rotation part 300 rotates at a constant speed of, for example, 50 ms (milliseconds)/1 rotation, when detection is performed with a detection resolution of 0.5 degrees, the light emitting element 102 emits the projection light 3A at a constant time interval of 69.444 µs. That is, a time interval between the continuous pervious and subsequent light projection reference timings at which light is projected by the light emitting element 102 is a constant time interval of 69.444 µs.

For example, when a time from a time point at which the projection light 3A is projected to a time point at which the detection light is received is defined as T (s), T (s) is the time taken for the light to reciprocate, and the one-way time is half thereof. Therefore, when the speed of light is assumed to be 3.0 × 10⁸ (m/s), a distance OL to an object is calculated by T (s) × 3.0 × 10⁸ (m/s)/2.

The distance measurement control unit 610 calculates the distance OL to an object. The distance measurement control unit 610 compares the distance OL to an object with the area detection setting distance DL. When the distance OL to an object is equal to or shorter than the area detection setting distance DL, the distance measurement control unit 610 determines that the object is present in the detection area DR (see FIGS. 5 and 6). When the distance OL to an object is longer than the area detection setting distance DL, the distance measurement control unit 610 determines that the object is present outside the detection area DR (see FIGS. 7 and 8).

Since a temporal positional relation is illustrated in FIGS. 6 and 8, when the time of flight between the projection light 3A and the detection light is within the area detection setting time DT corresponding to the area detection setting distance DL, it is indicated that an object is present in the detection area DR. When the time of flight between the projection light 3A and the detection light is out of the area detection setting time DT, it is indicated that an object is present outside the detection area DR. The area detection setting time DT is a time based on a maximum possible distance (that is, area detection setting distance DL) of the projection light 3A and the speed of light and is a time required for the light to reciprocate in the area detection setting distance DL, and thus is a value obtained by dividing twice the area detection setting distance DL by the speed of light (that is, area detection setting distance DL × 2/speed of light). The time measurement of the area detection setting time DT is started immediately after projection of the projection light 3A.

### <Details of Normal Light Projection Mode>

Next, details of the normal light projection mode will be described.

In the normal light projection mode, the light projection timing generation unit 640 generates the light projection reference timing at every predetermined rotation angle, that is, at constant time intervals, and the light projection timing correction unit 650 determines each of the light projection reference timings as it is as the light projection timing without temporally shifting the light projection reference timing.

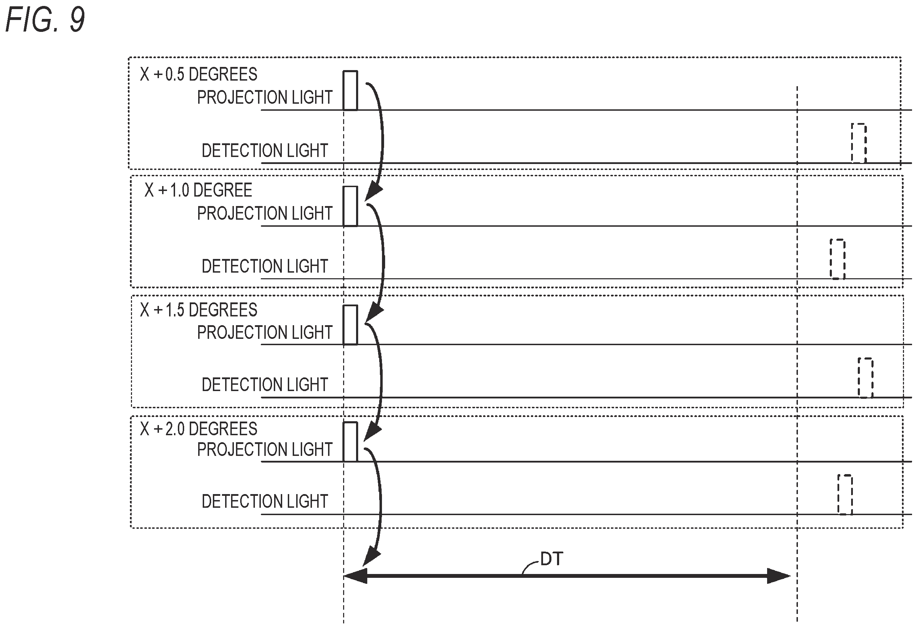

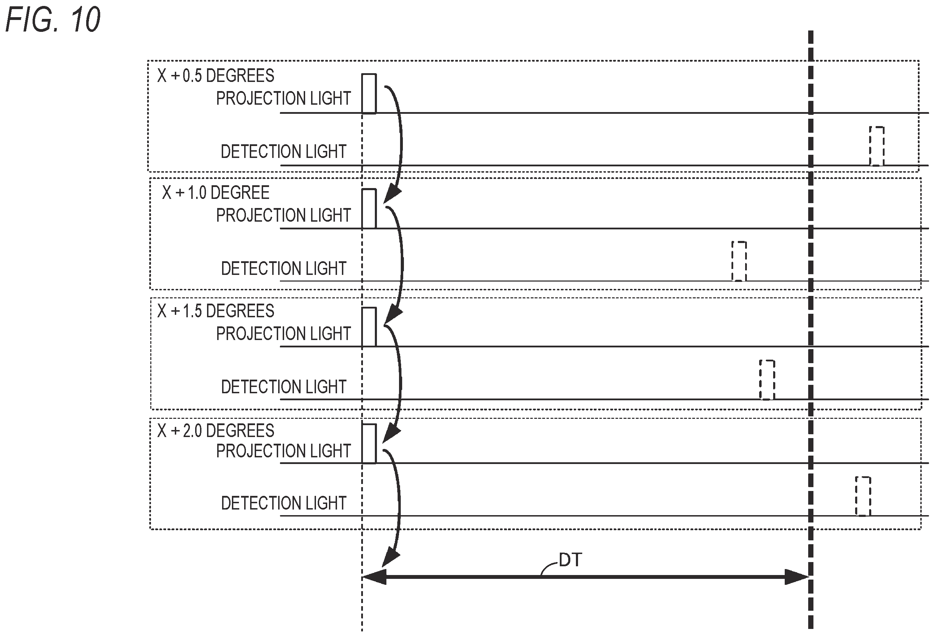

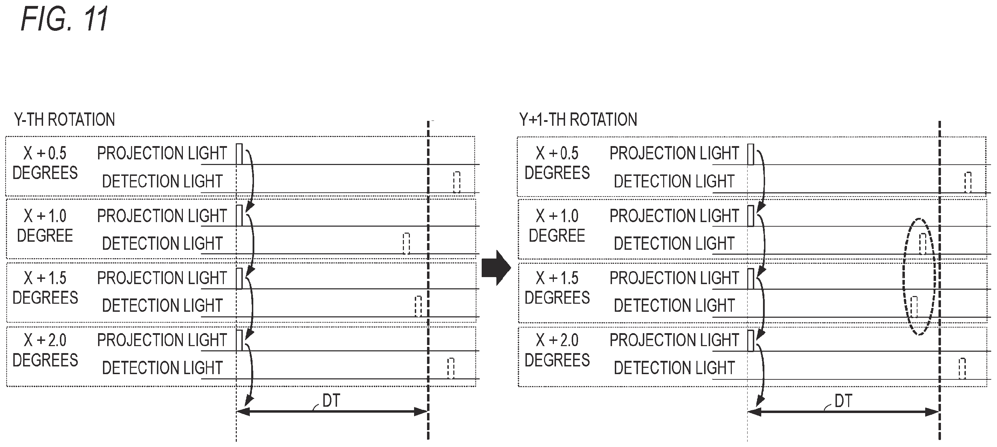

FIG. 9 is a diagram illustrating a first example of the light projection timing and the light reception timing in the normal light projection mode. FIG. 10 is a diagram illustrating a second example of the light projection timing and the light reception timing in the normal light projection mode. FIG. 11 is a diagram illustrating a third example of the light projection timing and the light reception timing in the normal light projection mode.

In FIGS. 9 to 11, as an example, the light projection timing generation unit 640 generates the light projection reference timing to project the projection light 3A every time the projection light 3A is rotated by 0.5 degrees relative to a reference angle X degrees, that is, at X + 0.5 degrees, X + 1.0 degree, and ....

In FIGS. 9 and 10, as a detection condition for detecting an object, it is necessary to detect a width of the object. Therefore, it is necessary to continuously detect the detection light at a plurality of points, and when the detection light is received N times continuously for each projection light 3A within the area detection setting time DT, it is determined that an object is present in the detection area DR. Here, as an example, N = 2.

More specifically, the detection condition may include a condition for determining that an object is present (may be present), and the condition may include a condition for continuous detection at a plurality of points because it is necessary to detect the width of the object. The detection condition may include a condition for determining that an object is present, and this condition may include detection on the width of the object for a plurality of rotations (M rotations). In this case, the detection for a plurality of rotations may include detection at different angles for a plurality of rotations (for example, first rotation and another rotation). If detection is continuously performed at a plurality of points in each of the M rotations, the number of continuous points may be different. Here, the plurality of rotations may be continuous rotations or discontinuous rotations.

In FIG. 9, at X + 0.5 degrees, X + 1.0 degree, X + 1.5 degrees, and X + 2.0 degrees, the reflection light 3B is received at a time point after a time point until the area detection setting time DT elapses (also referred to as elapsed time point of area detection setting time DT). Accordingly, since the reflection light 3B (detection light) of the projection light 3A projected at continuous light projection reference timings is not received within the area detection setting time DT, the distance measurement control unit 610 determines that no object is present in the detection area DR. Therefore, the detection condition may include a condition for determining that no object is present, and this condition may include, for example, not detecting the width of the object (that is, not performing continuous detection at plurality of points) and not continuously detecting the width of the object for a plurality of rotations.

In FIG. 10, at X + 0.5 degrees and X + 2.0 degrees, the reflection light 3B is received at a time later than the elapsed time point of the area detection setting time DT. In addition, at X + 1.0 degree and X + 1.5 degrees, the reflection light 3B is received at a time point before the elapsed time point of the area detection setting time DT. Accordingly, since the reflection light 3B (detection light) of the projection light 3A projected at continuous light projection reference timings is received within the area detection setting time DT, the distance measurement control unit 610 determines that an object is present in the detection area DR.

In FIG. 11, as a detection condition for detecting an object, when the detection light of the projection light 3A is received N times continuously for M rotations of the rotation part 300 continuously within the area detection setting time DT, it is determined that an object is present in the detection area DR. For example, here, as an example, N = 2, M = 2. In addition, since there is a possibility that the object is moving, the position where the object is detected may have different angles or different ranges.

In FIG. 11, the reflection light 3B is received at a time point before the elapsed time point of the area detection setting time DT at X + 1.0 degree and X + 1.5 degrees in both Y-th rotation and Y+1-th rotation of the rotation part 300, as in FIG. 10. That is, in FIG. 11, the detection light is received twice continuously for two rotations continuously, and the reflection light 3B is received at a time point before the elapsed time point of the area detection setting time DT. Therefore, the distance measurement control unit 610 determines that an object is present in the detection area DR.

In this way, the object detection device 1 can prevent erroneous detection of an object such as floating dust that does not actually exist by making the object detection condition strict. For example, the object detection device 1 detects presence or absence of an object in the detection area DR for each detection resolution, and when the detection light is received N times continuously for M rotations continuously (N and M are 2 or more) before elapse of the area detection setting time DT, the distance measurement control unit 610 determines that an object is present in the detection area DR. Then, the distance measurement control unit 610 outputs the determination result to the external input/output circuit 730. The external input/output circuit 730 notifies an external device of information on the determination result.

### <Details of Shift Light Projection Mode>

Next, details of the shift light projection mode SM will be described.

The shift light projection mode SM may include one or more shift light projection modes SM in which the method of correcting the light projection reference timing is different. The shift light projection mode SM may include, for example, at least one of shift light projection modes SM1 to SM5 described later.

In the shift light projection mode, the light projection timing generation unit 640 generates a plurality of light projection reference timings to project light a plurality of times at a constant period, similarly to the normal light projection mode. In addition, the light projection timing correction unit 650 shifts each of the light projection reference timings such that the shift time for shifting each light projection reference timing changes by the constant time α that is longer than the area detection setting time DT, and determines the light projection timing.

In the shift light projection mode, the light projection timing generation unit 640 may generate a plurality of light projection reference timings such that light is projected at every constant angle (for example, every 0.5 degrees) in the rotation by the rotation part 300. The light projection timing correction unit 650 may shift each of the light projection reference timings such that the shift time for shifting each light projection reference timing changes by the constant time α at every constant angle, and determine the light projection timing.

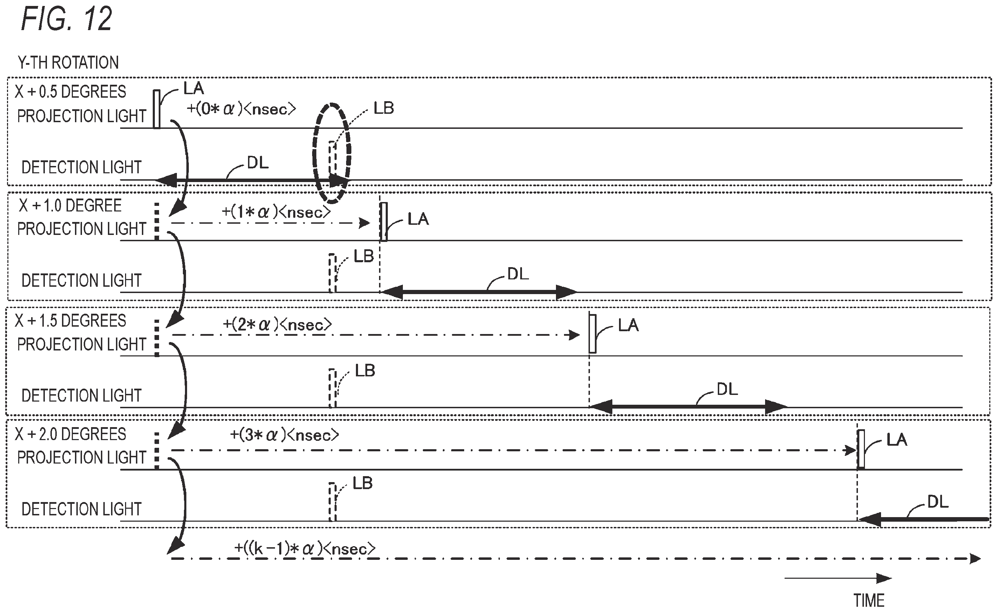

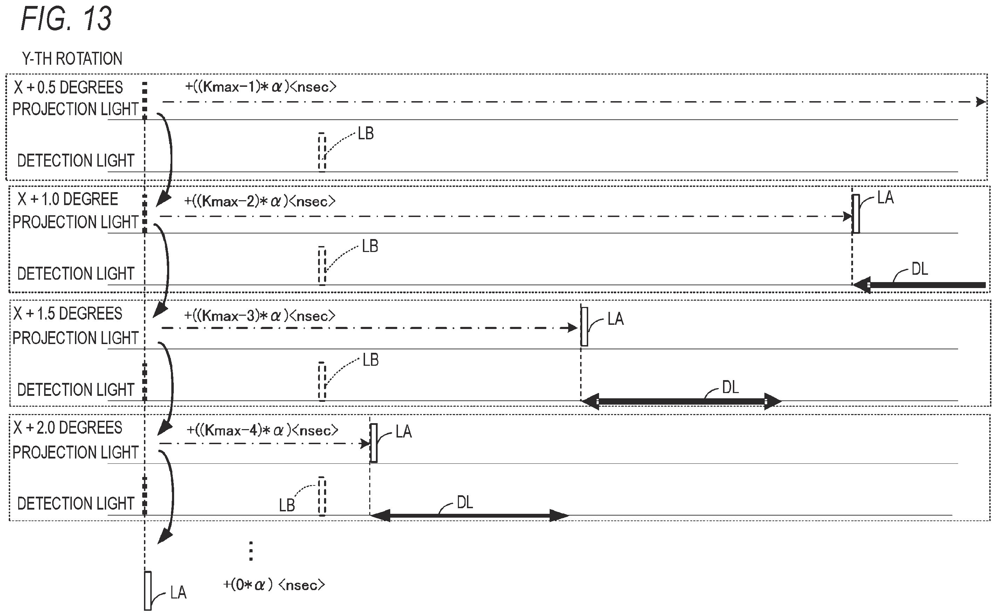

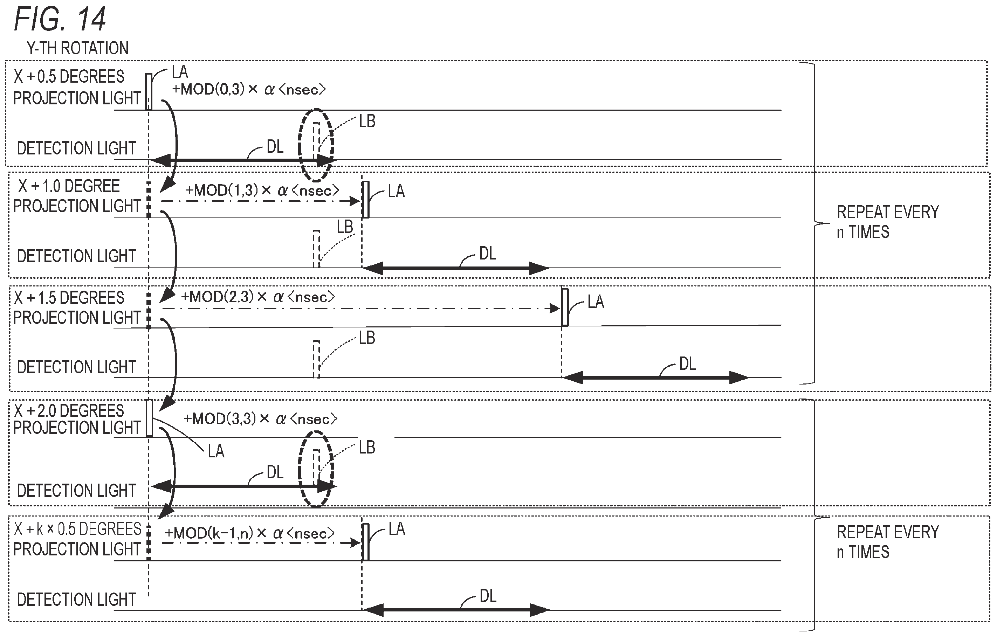

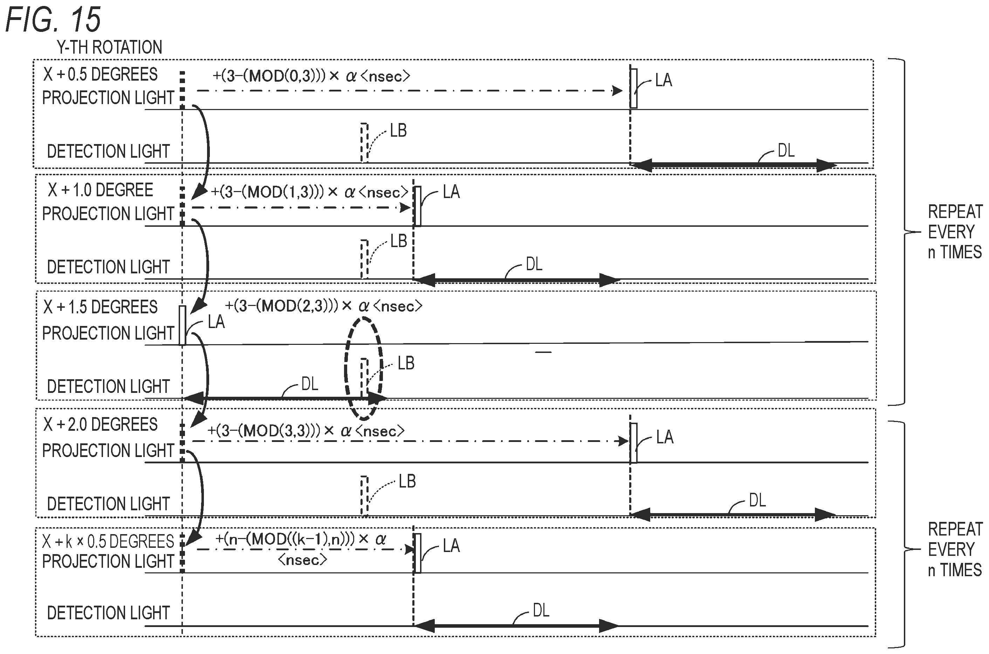

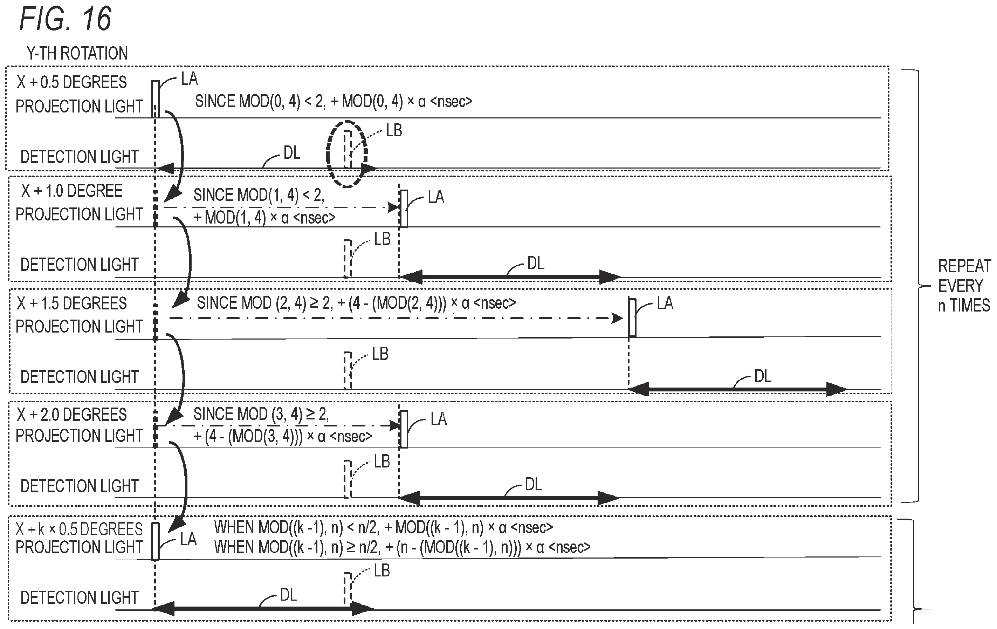

FIG. 12 is a diagram illustrating an example of the light projection timing and the light reception timing when the shift light projection mode SM1 is designated. FIG. 13 is a diagram illustrating an example of the light projection timing and the light reception timing when the shift light projection mode SM2 is designated. FIG. 14 is a diagram illustrating an example of the light projection timing and the light reception timing when the shift light projection mode SM3 is designated. FIG. 15 is a diagram illustrating an example of the light projection timing and the light reception timing when the shift light projection mode SM4 is designated. FIG. 16 is a diagram illustrating an example of the light projection timing and the light reception timing when the shift light projection mode SM5 is designated.

In FIGS. 12 to 16, as an example, the light projection timing generation unit 640 generates the light projection reference timing, at which the projection light 3A is projected, every time the projection light 3A is rotated by 0.5 degrees relative to the reference angle X degrees, that is, at X + 0.5 degrees, X + 1.0 degree, and .... A k-th light projection angle is X + k × 0.5 (degrees), and for example, in order to project light at an angle of 160 degrees to 200 degrees, X = 159.5 degrees and k = 1 to 81, and the number of light emissions is 81 when the maximum number of light emissions is defined as Kmax.

In FIGS. 12 to 16, as a detection condition for detecting an object, when the detection light is received N times continuously with respect to each projection light 3A within the area detection setting time DT corresponding to the area detection setting distance DL, it is determined that the object is present in the detection area DR. Here, as an example, N = 2.

As an example, in a case where the motor 402, that is, the rotation part 300 rotates at a constant speed of, for example, 50 ms (milliseconds)/1 rotation, when detection is performed with a detection resolution of 0.5 degrees, the light emitting element 102 emits the projection light 3A at a constant time interval of 69.444 µs. That is, a time interval between the continuous pervious and subsequent light projection reference timings at which light is projected by the light emitting element 102 is a constant time interval of 69.444 µs.

In addition, in FIGS. 12 to 16, it is assumed that a plurality of object detection devices 1 (1A and 1B) are disposed to face each other. Therefore, the one object detection device 1A may receive the projection light 3A projected by the object detection device 1B. It is assumed that the object detection device 1A is set to any shift light projection mode and projects the projection light 3A with the light projection timing at a constant period being shifted. It is assumed that the object detection device 1B is set to the normal light projection mode and projects the projection light 3A at a constant period. In FIGS. 12 to 16, the projection light 3A projected by the object detection device 1A is indicated by "LA", and the projection light 3A projected by the object detection device 1B is indicated by "LB".

In FIG. 12, the light projection timing correction unit 650 shifts each of the light projection reference timings such that the shift time increases by the constant time α, and determines the light projection timing.

In FIG. 12, when a correction amount of the light projection timing as the shift time is defined as α (ns), the shift time is 0 × α at the light projection timing of the first projection light 3A at X + 0.5 degrees. At the light projection timing of the second projection light 3A at X + 1.0 degree, the shift time is 1 × α. At the light projection timing of the k-th projection light 3A at X + k × 0.5 degrees, the shift time is (k - 1) × α. That is, the light projection timing correction unit 650 can increase the shift time by the constant time α and add the gradually increasing shift time to the light projection reference timing, thereby gradually shifting the light projection timing to a later time.

Accordingly, the object detection device 1 can correct the light projection timing while reducing the temporal shift from the light projection reference timing as much as possible, and can shift the light projection timing to a timing close to an originally scheduled light projection timing. In FIG. 12, the detection light of the first projection light 3A (here, projection light 3A of object detection device 1B) is received within the area detection setting time DT. However, the detection light of the second and subsequent projection light is not received within the area detection setting time DT. Therefore, the object detection device 1 can prevent erroneous detection of presence of an object.

In FIG. 13, the light projection timing correction unit 650 shifts each of the light projection reference timings such that the shift time decreases by the constant time α, and determines the light projection timing.

In FIG. 13, when a correction amount of the light projection timing as the shift time is defined as α (ns), the shift time is (Kmax - 1) × α at the light projection timing of the first projection light 3A at X + 0.5 degrees. At the light projection timing of the second projection light 3A at X + 1.0 degree, the shift time is (Kmax - 2) × α. At the light projection timing of the k-th projection light 3A at X + k × 0.5 degrees, the shift time is (Kmax - k) × α. At the light projection timing of the Kmax-th projection light 3A at X + Kmax × 0.5 degrees, the shift time is 0 × α. That is, the light projection timing correction unit 650 can decrease the shift time by the constant time α and add the gradually decreasing shift time to each of the light projection reference timings, thereby gradually shifting the light projection timing to a previous time.

Accordingly, in the object detection device 1, there is a high possibility that the projection light 3A from another object detection device 1 (here, object detection device 1B) can be prevented from being received within the area detection setting time DT at the light projection timing of an early stage such as the first and second light projection, and the possibility that erroneous recognition of presence of an object occurs can be reduced.

In FIG. 14, the light projection timing correction unit 650 may shift each of the light projection reference timings such that the shift time increases by the constant time α over a predetermined number of shifts (for example, n times). Then, the light projection timing correction unit 650 may return the light projection timing to the light projection reference timing after completion of the predetermined number of shifts and determine the light projection timing to repeat the same shift of each of the light projection reference timings over the predetermined number of shifts. FIG. 14 illustrates that n = 3.

Specifically, in order to repeat the shift by the number of shifts (n times), the shift time is shifted by the number of the remainder when (k - 1) is divided by n at the time of k-th light projection, so that the shift can be repeated. It is assumed that a function that outputs the number of the remainder of (k - 1)/n is MOD((k - 1), n), and the correction amount of the light projection timing as the shift time is defined as α (ns). In FIG. 14, n = 3. In this case, at the light projection timing of the first projection light 3A at X + 0.5 degrees, the shift time is MOD(0, 3) × α (= 0 × α). At the light projection timing of the second projection light 3A at X + 1.0 degree, the shift time is MOD(1, 3) × α (= 1 × α). At the light projection timing of the third projection light 3A at X + 1.5 degrees, the shift time is MOD(2, 3) × α (= 2 × α). At the light projection timing of the third projection light 3A at X + 1.0 degree, the shift time is MOD(2, 3) × α (= 2 × α). At the light projection timing of the fourth projection light 3A at X + 2.0 degrees, the shift time is MOD(3, 3) × α (= 0 × α). Accordingly, when n = 3, the shift can be repeated three times. Therefore, at the light projection timing of the k-th projection light 3A at X + k × 0.5 degrees, the shift time is MOD((k - 1), n) × α.

That is, the light projection timing correction unit 650 increases the shift time by the constant time α for the predetermined number of shifts, and adds the gradually increasing shift time to each of the light projection reference timings, thereby gradually shifting the light projection timing to a later time. Thereafter, the light projection timing correction unit 650 resets the temporal shift of the light projection reference timing, and gradually shifts the light projection timing to a later time by the constant time α. Accordingly, the object detection device 1 can prevent the shift time from being accumulated and becoming too long, and can prevent a light projection frequency of the projection light 3A from decreasing.

In FIG. 15, the light projection timing correction unit 650 may shift each of the light projection reference timings such that the shift time decreases by the constant time α over a predetermined number of shifts (for example, n times). Then, the light projection timing correction unit 650 may return the light projection timing to the light projection reference timing after completion of the predetermined number of shifts and determine the light projection timing to repeat the same shift of each of the light projection reference timings over the predetermined number of shifts. FIG. 15 illustrates that n = 3.

Specifically, in order to repeat the shift by the number of shifts (n times), the shift time can be shifted by a value obtained by subtracting the number of the remainder when (k - 1) is divided by n from n at the time of the k-th light projection, so that the shift can be repeated. It is assumed that a function that outputs the number of the remainder of (k - 1)/n is MOD(k - 1, n), and the correction amount of the light projection timing as the shift time is defined as α (ns). In FIG. 15, it is assumed that n = 3. In this case, at the light projection timing of the first projection light 3A at X + 0.5 degrees, the shift time is (3 - (MOD(0, 3))) × α (= 3 × α). At the light projection timing of the second projection light 3A at X + 1.0 degree, the shift time is 3 - (MOD(1, 3)) × α (= 2 × α). At the light projection timing of the third projection light 3A at X + 1.5 degrees, the shift time is 3 - (MOD(2, 3)) × α (= 1 × α). At the light projection timing of the fourth projection light 3A at X + 2.0 degrees, the shift time is 3 - (MOD(3, 3)) × α (= 3 × α). Accordingly, when n = 3, the shift can be repeated three times. Therefore, at the light projection timing of the k-th projection light 3A at X + k × 0.5 degrees, the shift time is (n- (MOD((k - 1), n))) × α.

That is, the light projection timing correction unit 650 decreases the shift time by the constant time α for the predetermined number of shifts, and adds the gradually decreasing shift time to each of the light projection reference timings, thereby gradually shifting the light projection timing to a previous time. Thereafter, the light projection timing correction unit 650 resets the temporal shift of the light projection reference timing, and gradually shifts the light projection timing to a previous time by the constant time α. Accordingly, the object detection device 1 can prevent the shift time from being shortened, and can easily secure the time interval between the light projection reference timing and the corrected light projection timing. Accordingly, in the object detection device 1, there is a high possibility that the projection light 3A from another object detection device 1 (here, object detection device 1B) can be prevented from being received within the area detection setting time DT, and the possibility that erroneous recognition of presence of an object occurs can be reduced.

In FIG. 16, the light projection timing correction unit 650 may shift each of the light projection reference timings such that the shift time becomes larger (longer) by the constant time α, then shift each of the light projection reference timings such that the shift time becomes smaller (shorter) by the constant time α, and determine the light projection timing. Alternatively, the light projection timing correction unit 650 may shift each of the light projection reference timings such that the shift time becomes smaller by the constant time α, then shift each of the light projection reference timings such that the shift time becomes larger by the constant time α, and determine the light projection timing. FIG. 16 illustrates that n = 4.

Specifically, in order to repeat the shift by the number of shifts (n times), the light projection timing correction unit 650 can cope with the shift by repeating switch of the processing between a case where the number of the remainder obtained by dividing (k - 1) by n is smaller than n/2 and a case where the number of the remainder is equal to or larger than n/2 at the time of k-th light projection. It is assumed that a function that outputs the number of the remainder of (k - 1)/n is MOD(k - 1, n), and the correction amount of the light projection timing as the shift time is defined as α (ns). In FIG. 16, it is assumed that n = 4. In this case, at the light projection timing of the first projection light 3A at X + 0.5 degrees, MOD(0, 4) = 0, the number of the remainder is smaller than n/2 (= 2), and thus the shift time is (MOD(0, 4)) × α (= 0 × α). At the light projection timing of the second projection light 3A at X + 1.0 degree, MOD(1, 4) = 1, the number of the remainder is smaller than n/2 (= 2), and thus the shift time is (MOD(1, 4)) × α (= 1 × α). At the light projection timing of the third projection light 3A at X + 1.5 degrees, MOD(2, 4) = 2, the number of the remainder is equal to or larger than n/2 (= 2), and thus the shift time is (4 - (MOD(2, 4))) × α (= 2 × α). At the light projection timing of the fourth projection light 3A at X + 2.0 degrees, MOD(3, 4) = 3, the number of the remainder is equal to or larger than n/2 (= 2), and thus the shift time is (4 - (MOD(3, 4))) × α (= 1 × α). At the light projection timing of the fifth projection light 3A at X + 2.5 degrees, MOD(4, 4) = 0, the number of the remainder is smaller than n/2 (= 2), and thus the shift time is (MOD(4, 4)) × α (= 0 × α). Therefore, at the light projection timing of the k-th projection light 3A at X + k × 0.5 degrees, the shift time is (MOD((k - 1), n)) × α when MOD((k - 1), n) is smaller than n/2, and is (n - (MOD((k - 1), n))) × α when MOD((k - 1), n) is equal to or larger than n/2. The light projection timing correction unit 650 may correct the light projection reference timing to repeat such a change in the shift time.

Even with such mountain-shaped or valley-shaped light projection reference timings, the object detection device 1 can prevent reception of the projection light 3A by another object detection device 1 within the area detection setting time DT, that is, can prevent erroneous recognition that an object is present in the detection area DR.

The constant time α is set to be longer than the maximum distance-measurable interval (maximum detectable interval) until the time-out of the TDC 500. Specifically, when the maximum measurable section (maximum detectable section) is L = 4,500 mm, the speed of light is 3.0 × 10⁸ m/s, and thus the time taken for light to reciprocate through L = 4,500 mm is T = L × 2/speed of light = 30 (nsec). Therefore, the light projection timing correction unit 650 sets the value of α (ns), which is the basis of the shift time as the timing correction amount, to be larger than T.

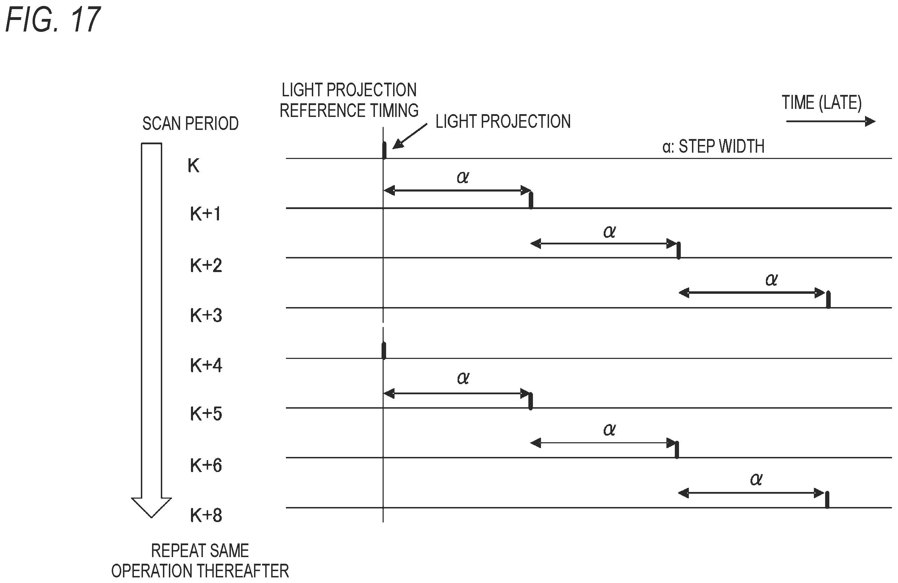

FIG. 17 is a diagram illustrating the light projection timing when another shift light projection mode SM6 is designated.

The light projection timing correction unit 650 incrementally shifts the light projection timing from the light projection reference timing in a ± direction for each scan period, that is, for each rotation of the rotation part 300 in accordance with the shift light projection mode SM6, and determines the light projection timing. The scan period here may be rotation at a predetermined angle within one rotation of the rotation part 300 as described above, or may be rotation of one rotation unit of the rotation part 300. The shift time that is incrementally shifted is increased or decreased by the constant time α as described above. The light projection timing correction unit 650 determines the light projection timing such that light is projected at a time shifted from the light projection reference timing by the constant time α for each scan period. When the light projection timing correction unit 650 shifts the light projection timing by the set number of shifts and determines the light projection timing, light is projected at the light projection reference timing in the next scan period. Thereafter, the light projection timing correction unit 650 similarly determines the light projection timing while shifting the light projection reference timing by the constant time α.

The constant time α, which is the basis of the shift time, is 60 ns when the maximum measurable section (maximum detectable section) has a double margin, for example, because the time required for the light to reciprocate needs to be longer than T = L × 2/speed of light = 30 (nsec), which is obtained from L = 4,500 mm. Since the light is projected at intervals of 69.444 µs, the number of shifts in this case is 1,157 times at the maximum by dividing the light projection interval by the constant time α.

In this way, when one object detection device 1A is set to the normal light projection mode and the other object detection device 1B is set to the shift light projection mode, the object detection device 1A can prevent occurrence of interference due to the projection light 3A of the other object detection device 1B, as illustrated in FIGS. 12 to 16, and can prevent erroneous detection of an object.

In addition, by making the shift times different from each other by the constant time α which is longer than the area detection setting time DT at the two temporally-pervious and subsequent light projection timings, the interference can also be prevented at the subsequent light projection timing when interference occurs at the previous light projection timing, for example. This is because, since the constant time α is longer than the area detection setting time DT, it is possible to prevent the projection light that is periodically projected from being received within the area detection setting time DT at a subsequent light projection timing.

When one object detection device 1A is set to the normal light projection mode and the other object detection device 1B is set to the shift light projection mode, the object detection device 1A can prevent occurrence of interference due to the projection light 3A of the other object detection device 1B, as illustrated in FIGS. 12 to 16, and can prevent erroneous detection of an object.

In addition, the object detection device 1 can prevent erroneous detection of an object such as floating dust that does not actually exist by making the object detection condition in the shift light projection mode strict, similarly to the normal light projection mode. For example, the object detection device 1 detects presence or absence of an object in the detection area DR for each detection resolution, and when the detection light is received N times continuously for M rotations continuously (N and M are 2 or more) before the area detection setting time DT elapses, the distance measurement control unit 610 determines that an object is present in the detection area DR. Then, the distance measurement control unit 610 outputs the determination result to the external input/output circuit 730. The external input/output circuit 730 notifies an external device of information on the determination result.

In this way, the object detection device 1 according to the present embodiment can switch and set a plurality of light projection modes, so that when a plurality of object detection devices 1 are arranged, an interference state due to the projection light 3A projected from another object detection device can be prevented from occurring continuously. Accordingly, the object detection device 1 can prevent erroneous detection of presence of an object, due to interference, even though no object is present in a space.

In addition, by setting the shift light projection mode, the object detection device 1 can prevent interference by flexibly advancing or delaying the light projection timing. The probability of no interference can also be increased by allowing different light projection modes to be set, for example, when the light projection reference timing is generated at the same constant period. When different light projection modes are set, it is possible to prevent the interference state due to the projection light 3A projected by the other object detection device from continuing.

In addition, in the object detection device 1, the light receiving sensitivity of the light receiving element 103 may be increased in order to detect the projected light as much as possible. In this case, a plurality of object detection devices 1 are arranged to face one another, so that interference may occur with high probability. In addition, when stray light from production equipment or FA equipment in a factory in which the object detection device 1 is installed is also included, the possibility of interference is further increased. In contrast, according to the object detection device 1, light can be projected at each light projection timing obtained by regularly correcting the light projection reference timing, and the occurrence of interference can be prevented.

Although various embodiments have been described above with reference to the drawings, it is needless to say that the present disclosure is not limited to such examples. It is apparent that those skilled in the art can conceive of various modifications or corrections within the scope described in the claims, and it is understood that such modifications or corrections naturally fall within the technical scope of the present disclosure. The components in the above embodiments may be freely combined without departing from the scope of the invention.

### <Overview of Present Embodiment>

As described above, at least the following matters are described in the present disclosure. Components corresponding to those in the above embodiment are shown in parentheses, but the present disclosure is not limited thereto.

### (Item 1)

An object detection device (object detection device 1) including:
a light emitting element (light emitting element 102) configured to project projection light (projection light 3A) in accordance with a light projection timing;
a light receiving element (light receiving element 103) configured to receive reflection light of the projection light reflected by an object and to generate a light reception signal; and
a controller (controller 600), in which
the controller
generates a plurality of light projection reference timings to project light a plurality of times at a constant period,
is capable of setting a first light projection mode (normal light projection mode) in which light is projected with each of the light projection reference timings as the light projection timing and a second light projection mode (shift light projection mode) in which light is projected in accordance with the light projection timing obtained by temporally shifting each of the light projection reference timings, and
in the second light projection mode, shifts each of the light projection reference timings such that a shift time for shifting each of the light projection reference timings changes by a constant time (constant time α), and determines the light projection timing.

Accordingly, the object detection device can also prevent, when a plurality of object detection devices are disposed in the vicinity thereof, an interference state due to projection light projected by another object detection device from occurring continuously, and can prevent erroneous detection of presence of an object.

### (Item 2)

The object detection device according to item 1, in which
in the second light projection mode, the controller shifts each of the light projection reference timings such that the shift time changes by the constant time for a predetermined number of shifts, returns the light projection timing to the light projection reference timing after completion of the predetermined number of shifts, and determines the light projection timing to repeat the shift of each of the light projection reference timings for the predetermined number of shifts.

Accordingly, the object detection device can prevent a change in shift time being accumulated and a time of flight between the light projection reference timing and the corrected light projection timing from becoming too long. Therefore, the object detection device can prevent a decrease in light projection frequency of the projection light and object detection in a detection direction different from an originally intended detection direction.

### (Item 3)

The object detection device according to item 1 or 2, in which
in the second light projection mode, the controller shifts each of the light projection reference timings such that the shift time increases by the constant time, and determines the light projection timing.

Accordingly, the object detection device can correct the light projection timing while reducing a temporal shift from the light projection reference timing as much as possible, for example, by gradually increasing the light projection timing from the light projection reference timing. Therefore, the object detection device can shift the light projection timing to a timing close to an originally scheduled light projection timing.

### (Item 4)

The object detection device according to item 1 or 2, in which
in the second light projection mode, the controller shifts each of the light projection reference timings such that the shift time decreases by the constant time, and determines the light projection timing.

Accordingly, the object detection device can be expected to be able to check whether the projection light 3A is received from another object detection device at the light projection timing at an early stage by gradually shortening the shift time by a constant time from a timing as far as possible from a light projection reference timing after the light projection reference timing, for example. Therefore, there is a high possibility that the object detection device can avoid reception of interference light within a longest time corresponding to a longest distance measurable by the projection light, and the possibility of occurrence of object erroneous detection can be reduced.

### (Item 5)

The object detection device according to item 1 or 2, in which
in the second light projection mode, the controller
shifts each of the light projection reference timings such that the shift time increases by the constant time, then shifts each of the light projection reference timings such that the shift time decreases by the constant time, and determines the light projection timing, or
shifts each of the light projection reference timings such that the shift time decreases by the constant time, then shifts each of the light projection reference timings such that the shift time increases by the constant time, and determines the light projection timing.

Accordingly, the object detection device can also prevent, when the shift time is increased or decreased at a constant time continuously for a plurality of times, an interference state due to projection light projected by another object detection device from occurring continuously, and can prevent erroneous detection of presence of an object.

### (Item 6)

The object detection device according to any of items 1 to 5, further including:
a rotation part (rotation part 300) configured to project the projection light along a first plane (upper surface or bottom surface of fixed part 100, floor surface, housing surface of predetermined device) and to cause a light projection direction of the projection light to rotate along the first plane, in which
the controller
controls the rotation part to rotate at a constant speed,
generates the plurality of light projection reference timings to project light at every constant angle during rotation by the rotation part, and
in the second light projection mode, shifts each of the light projection reference timings such that the shift time for shifting each of the light projection reference timings changes by the constant time at every constant angle, and determines the light projection timing.

Accordingly, the object detection device can also prevent, when light may be projected in various directions by rotation by the rotation part and detection on an object is possible, an interference state due to projection light projected by another object detection device from occurring continuously, and can prevent object erroneous detection.

### (Item 7)

The object detection device according to any of items 1 to 6, in which
the constant time is longer than a time based on a longest distance measurable by the projection light (area detection setting distance DL) and a speed of light (area detection setting time DT).

Accordingly, even when interference occurs at a previous light projection timing, the object detection device can prevent interference at a subsequent light projection timing. This is because it is possible to prevent the projection light projected periodically from being received within the time (area detection setting time DT) at a subsequent light projection timing.

### (Item 8)

The object detection device according to any of items 1 to 7, in which
the controller
acquires a clock generated by a clock generator, and
determines the constant period based on the clock.

Accordingly, the object detection device can also determine the constant period when an operation of a rotation angle detector is inaccurate.

### (Item 9)

The object detection device according to any of items 1 to 7, in which
a rotation angle of the rotation part detected by a rotation angle detector (rotation angle detector 403) that detects the rotation angle is acquired, and
the constant period is determined based on the rotation angle.

Accordingly, the object detection device can also determine the constant period when an operation of the clock generator is inaccurate.

### (Item 10)

An object detection method including:
projecting projection light in accordance with a light projection timing;
receiving reflection light of the projection light reflected by an object and generating a light reception signal;
generating a plurality of light projection reference timings to project light a plurality of times at a constant period, and
setting a light projection mode, in which
as the light projection mode, a first light projection mode in which light is projected with each of the light projection reference timings as the light projection timing and a second light projection mode in which light is projected in accordance with the light projection timing obtained by temporally shifting each of the light projection reference timings are set, and
the setting of the light projection mode includes
when the second light projection mode is set as the light projection mode, shifting each of the light projection reference timings such that a shift time for shifting each of the light projection reference timings changes by a constant time, and determining the light projection timing.

Accordingly, the same effect as that of item 1 is obtained.

The present application is based on a Japanese patent application filed on December 27, 2023 (Japanese Patent Application No. 2023-221086), and contents thereof are incorporated herein by reference.

### INDUSTRIAL APPLICABILITY

The present disclosure is useful for an object detection device, an object detection method, and the like that can prevent erroneous detection of presence of an object due to interference of projection light from another object detection device even when the other object detection device is disposed to face the object detection device.

### REFERENCE SIGNS LIST

1 OBJECT DETECTION DEVICE
3A PROJECTION LIGHT
3B REFLECTION LIGHT
10 OUTER COVER
11 WAVELENGTH WINDOW
100 FIXED PART
101 BOARD
102 LIGHT EMITTING ELEMENT
103 LIGHT RECEIVING ELEMENT
104 FOCUS LENS
105 COLLIMATOR LENS
106 COIL
107 PHOTOINTERRUPTER
108 AMPLIFIER CIRCUIT
109 LASER DRIVE CIRCUIT
300 ROTATION PART
301 ROTATION MEMBER
302 MAGNET
303 REFLECTING MIRROR
311 RIB
401 COMPARATOR
402 MOTOR
403 ROTATION ANGLE DETECTOR
404 MOTOR DRIVE CIRCUIT
500 TDC
600 CONTROLLER
610 DISTANCE MEASUREMENT CONTROL UNIT
620 DISTANCE CALCULATION UNIT
630 ROTATION CONTROL UNIT
640 LIGHT PROJECTION TIMING GENERATION UNIT
650 LIGHT PROJECTION TIMING CORRECTION UNIT

## Claims

1. An object detection device comprising:
a light emitting element configured to project projection light in accordance with a light projection timing;
a light receiving element configured to receive reflection light of the projection light reflected by an object and to generate a light reception signal; and
a controller, wherein
the controller
generates a plurality of light projection reference timings to project light a plurality of times at a constant period,
is capable of setting a first light projection mode in which light is projected with each of the light projection reference timings as the light projection timing and a second light projection mode in which light is projected in accordance with the light projection timing obtained by temporally shifting each of the light projection reference timings, and
in the second light projection mode, shifts each of the light projection reference timings such that a shift time for shifting each of the light projection reference timings changes by a constant time, and determines the light projection timing.

2. The object detection device according to claim 1, wherein
in the second light projection mode, the controller shifts each of the light projection reference timings such that the shift time changes by the constant time for a predetermined number of shifts, returns the light projection timing to the light projection reference timing after completion of the predetermined number of shifts, and determines the light projection timing to repeat the shift of the light projection reference timings for the predetermined number of shifts.

3. The object detection device according to claim 1 or 2, wherein
in the second light projection mode, the controller shifts each of the light projection reference timings such that the shift time increases by the constant time, and determines the light projection timing.

4. The object detection device according to claim 1 or 2, wherein
in the second light projection mode, the controller shifts each of the light projection reference timings such that the shift time decreases by the constant time, and determines the light projection timing.

5. The object detection device according to claim 1 or 2, wherein
in the second light projection mode, the controller
shifts each of the light projection reference timings such that the shift time increases by the constant time, then shifts each of the light projection reference timings such that the shift time decreases by the constant time, and determines the light projection timing, or
shifts each of the light projection reference timings such that the shift time decreases by the constant time, then shifts each of the light projection reference timings such that the shift time increases by the constant time, determines the light projection timing.

6. The object detection device according to claim 1 or 2, further comprising:
a rotation part configured to project the projection light along a first plane and to cause a light projection direction of the projection light to rotate along the first plane, wherein
the controller
controls the rotation part to rotate at a constant speed,
generates the plurality of light projection reference timings to project light at every constant angle during rotation by the rotation part, and
in the second light projection mode, shifts each of the light projection reference timings such that the shift time for shifting each of the light projection reference timings changes by the constant time at every constant angle, and determines the light projection timing.

7. The object detection device according to claim 1 or 2, wherein
the constant time is longer than a time based on a longest distance measurable by the projection light and a speed of light.

8. The object detection device according to claim 1 or 2, wherein
the controller
acquires a clock generated by a clock generator, and
determines the constant period based on the clock.

9. The object detection device according to claim 6, wherein
a rotation angle of the rotation part is acquired from a rotation angle detector that detects the rotation angle, and
the constant period is determined based on the rotation angle.

10. An object detection method comprising:
projecting projection light in accordance with a light projection timing;
receiving reflection light of the projection light reflected by an object and generating a light reception signal;
generating a plurality of light projection reference timings to project light a plurality of times at a constant period, and
setting a light projection mode, wherein
as the light projection mode, a first light projection mode in which light is projected with each of the light projection reference timings as the light projection timing and a second light projection mode in which light is projected in accordance with the light projection timing obtained by temporally shifting each of the light projection reference timings are set, and
the setting of the light projection mode includes
when the second light projection mode is set as the light projection mode, shifting each of the light projection reference timings such that a shift time for shifting each of the light projection reference timings changes by a constant time, and determining the light projection timing.
